# EUROPÄISCHE PATENTANMELDUNG

(11) **EP 2 982 902 A1**
(43) Veröffentlichungstag der Anmeldung: **10.02.2016**
(21) Anmeldenummer: 15176376.0
(22) Anmeldetag: 13.07.2015
(51) Int. Cl.: F21S 8/10, F21S 8/12

(54) **PROJEKTIONSLICHTMODUL FÜR EINEN KRAFTFAHRZEUGSCHEINWERFER**

(30) Priorität: 08.08.2014 DE 102014215785
(71) Anmelder: Automotive Lighting Reutlingen GmbH, 72762 Reutlingen (DE)
(72) Erfinder: Rosenhahn, Ernst-Olaf, 72411 Bodelshausen (DE); Hoßfeld, Wolfgang, 72810 Gomaringen (DE); Humburg, Jens, 72770 Reutlingen (DE); Stauß, Benjamin, 22559 Hamburg (DE)
(74) Vertreter: DREISS Patentanwälte PartG mbB

(57) **Zusammenfassung**

Vorgestellt wird ein Projektionslichtmodul (10) für einen Kraftfahrzeugscheinwerfer, mit einer Abblendlichtblende (12), die ein oberhalb dieser Blende liegendes Abblendlichtvolumen (14) des Projektionslichtmoduls von einem unterhalb dieser Blende liegenden Fernlichtvolumen (16) des Projektionslichtmoduls trennt, und mit einer im Fernlichtvolumen angeordneten Fernlichtblende (22), die eine vertikale Blendenkante (22.1) aufweist und die das Fernlichtvolumen in ein rechts von ihr und ein links von ihr liegendes Fernlichtvolumen teilt. Das Lichtmodul zeichnet sich dadurch aus, dass die Abblendlichtblende und die Fernlichtblende Teile einer in sich starren Verbundblende (36) sind und dass die Fernlichtblende im Fernlichtvolumen schräg zu einer optischen Achse (38) des Projektionslichtmoduls angeordnet ist, so dass ihr Abstand von der optischen Achse des Projektionslichtmoduls mit längs der optischen Achse zunehmender Entfernung von der Blendenkante zunimmt.

## Beschreibung

Die vorliegende Erfindung betrifft ein Projektionslichtmodul für einen Kraftfahrzeugscheinwerfer nach dem Oberbegriff des Anspruchs 1.

Ein solches Projektionslichtmodul ist aus der DE 10 2011 012742 A1 bekannt und dazu eingerichtet, in seinem Inneren eine innere Lichtverteilung zu erzeugen. Es weist eine Sekundäroptik auf, die dazu eingerichtet und angeordnet ist, ein Bild der inneren Lichtverteilung als äußere Lichtverteilung in das Vorfeld des Projektionslichtmoduls zu projizieren. Es weist ferner eine Abblendlichtblende auf, die ein bei einer bestimmungsgemäßen Verwendung des Projektionslichtmoduls in einem eingebauten Scheinwerfer oberhalb dieser Blende liegendes Abblendlichtvolumen des Projektionslichtmoduls von einem unterhalb dieser Blende liegenden Fernlichtvolumen des Projektionslichtmoduls trennt. In dem Fernlichtvolumen ist eine Fernlichtblende angeordnet, die eine bei der genannten Verwendung mehr vertikal als horizontal verlaufende Blendenkante aufweist und die das Fernlichtvolumen in ein bei der genannten Verwendung rechts der Fernlichtblende liegendes rechtes Fernlichtvolumen und ein links der Fernlichtblende liegendes linkes Fernlichtvolumen teilt. Die Blendenkante ist so angeordnet, dass sie von der Sekundäroptik als mehr vertikal als horizontal verlaufende Hell-Dunkel-Grenze in der äußeren Lichtverteilung abgebildet wird.

Auf dem Markt stehen in den letzten Jahren Scheinwerfer zur Verfügung, die Lichtfunktionen erfüllen, die über eine kamerabasierte Bildauswertung der Szenerie vor dem Kraftfahrzeug gesteuert werden.

Unter einer Lichtfunktion wird dabei die Erzeugung einer Lichtverteilung durch den Scheinwerfer verstanden. Beispiele von Lichtverteilungen sind Abblendlichtverteilungen und Fernlichtverteilungen.

Durch die Steuerung erfolgt zum Beispiel eine automatische Fernlichtschaltung mit einer Teilfernlichtfunktion, die dafür sorgt, dass trotz entgegenkommendem und/oder vorausfahrendem Verkehr ein Teil des Fernlichtes aktiviert bleiben kann. Das Scheinwerfersystem erzeugt dort, wo sich andere Verkehrssteilnehmer befinden, einen Schatten oder einen nicht beleuchteten Teilbereich im Fernlichtbereich der Lichtverteilung, damit diese nicht geblendet werden. Eine solche, teilweise abgeschattete oder auf andere Art und Weise teilweise abgedunkelte Lichtverteilung wird im Folgenden auch als Teilfernlichtverteilung bezeichnet. Derartige Scheinwerfersysteme sind in unterschiedlicher Ausführung in Projektionslichtmodulen mit Gasentladungslampen realisiert. Bei einem Projektionssystem wird innerhalb des Scheinwerfers eine innere Lichtverteilung erzeugt, die von einer Sekundäroptik als äußere Lichtverteilung in den Außenraum vor dem Scheinwerfer projiziert wird.

Bei einem in Serie verwendeten Scheinwerfer der Anmelderin wird ein Doppelblenden-System über einen Schrittmotor und ein Getriebe betätigt, um auf diese Weise verschiedene Formen einer Hell-Dunkel-Grenze in der äußeren Lichtverteilung einer Abblendlichtfunktion zu erzeugen. Neben einer solchen adaptiven Abblendlichtfunktion erfüllt dieses bekannte Modul eine Vollfernlichtfunktion und in einer Blendenstellung auch eine Teilfernlichtfunktion, bei dem in einem Modul ein halbes Fernlicht mit vertikaler Hell-Dunkel-Grenze erzeugt wird, wobei der helle Bereich des halben Fernlichts jeweils auf der Fahrzeugaußenseite erzeugt wird und auf der Fahrzeuginnenseite jeweils eine im wesentlichen horizontale Hell-Dunkel-Grenze erzeugt wird. Unter einer im Wesentlichen horizontalen Hell-Dunkel-Grenze wird hier eine Hell-Dunkel-Grenze verstanden, die ein regelkonformes Abblendlicht ergibt. Dies ist insbesondere der Fall, wenn der Winkel, den diese Hell-Dunkel-Grenze mit dem Horizont einschließt, nicht größer als 30° ist. Eine mehr vertikal als horizontal verlaufende Hell-Dunkel-Grenze zeichnet sich dagegen dadurch aus, dass der Winkel, den sie mit einer Vertikalen bildet, kleiner ist als der Winkel den sie mit einer Horizontalen bildet.

Durch eine horizontale Schwenkung des gesamten Lichtmoduls (um eine vertikale Achse) kann die horizontale Position der vertikalen Hell-Dunkel-Grenze variiert werden. Das Zusammenspiel der beiden Projektionslichtmodule im Fahrzeug ermöglicht die Einstellung der Schattenposition und Schattenbreite je nach erforderlicher Fahrsituation. Durch den Schrittmotorantrieb kann die Umschaltgeschwindigkeit zwischen den einzelnen Lichtverteilungen variiert werden. So kann man z.B. die Umschaltgeschwindigkeit zwischen einzelnen Lichtverteilungen, zum Beispiel bei der Aktivierung und/oder Deaktivierung des Fernlichts oder des Teilfernlichts, bei einer manuellen Betätigung anders festlegen als bei einer automatischen Steuerung auf der Basis einer Bildauswertung eines Kamerabildes.

Bekannt sind auch Teilfernlichtmodule, bei denen eine bewegliche Blende (Klappblende), die über einen Elektromagneten angetrieben wird, betätigt wird. In der einen Stellung der Klappblende wird im Projektionslichtmodul eine Abblendlichtverteilung erzeugt, und in einer anderen Stellung der Klappblende wird eine Fernlichtverteilung erzeugt, die eine vertikale Hell-Dunkel-Grenze besitzt. Die horizontale Lage der vertikalen Hell-Dunkel-Grenze wird durch eine Schwenkung des ganzen Moduls verstellt. Durch ein Auseinanderschwenken der Module beider Anbauseiten kann ein Schatten im zentralen Bereich des Fernlichtes erzeugt werden. Es handelt sich also um eine Bifunktion mit Horizontaldrehung zur Positionierung der vertikalen Hell-Dunkel-Grenze: Lediglich das Abblendlicht und das Teilfernlicht können erzeugt werden. Wenn man nur ein Modul betrachtet, fehlt die volle Fernlichtfunktion. Das ist im Vergleich zum weiter oben beschriebenen System deutlich günstiger. Die volle Fernlichtfunktion wird durch Zusammenwirken eines rechten Scheinwerfers und eines linken Scheinwerfers erzeugt.

Im Falle des Fernlichtes ergibt sich dadurch aber ein kleiner Nachteil für den Fahrer, weil die jeweilige Fernlichtverteilung nicht ganz vollständig ist.

In der Mitte vor dem Fahrzeug überlagern sich zwar die Fernlichtverteilungen, aber rechts und links wirkt jeweils nur das Fernlicht von jeweils einem Modul. Außerdem ist die relativ scharfe vertikale Hell-Dunkel-Grenze der beiden Module im Fall des vollen Fernlichtes in bestimmten Fahrsituationen als schmaler, vertikaler Streifen größerer Helligkeit für den Fahrer noch erkennbar, was als störend empfunden wird.

In der DE 10 2009 008 631 A1 ist ein Projektionslichtmodul beschrieben, das mit Leuchtdioden (LED) als Lichtquellen arbeitet und mit Hilfe einer Primäroptik, welche die innere Lichtverteilung erzeugt, und einer als Projektionsoptik dienenden Sekundäroptik ein Abblendlicht und ein Fernlicht erzeugt. Unter anderem wird dort eine Blende im Strahlengang des Fernlichtes beschrieben, die durch eine weitestgehend vertikal verlaufende Kante ebenfalls die Erzeugung des Teilfernlichtes mit einer vertikalen Hell-Dunkel-Grenze ermöglicht. Insgesamt wird dort ein Modul beschrieben, das ohne mechanisch verstellbare Blenden ein Abblendlicht und ein Teilfernlicht erzeugt. Zur Fernlichtschaltung müssen nur zusätzliche Lichtquellen eingeschaltet werden, und durch die zusätzliche vertikale Blende ergibt sich automatisch ein Teilfernlicht, womit dieses Modul auch ein Bifunktionslichtmodul ist.

In der eingangs genannten DE 10 2011012 742 A1 wird ein Projektionslichtmodul beschrieben, das mit einer Anordnung von Reflektoren und Leuchtdioden und einer Spiegelblende ein Abblendlicht erzeugt, und das im Fernlichtbetrieb durch eine zusätzliche vertikale Blende, die entlang der Fahrtrichtung des Fahrzeuges ausgerichtet ist, zwei Teilfernlichtverteilungen erzeugen kann. Durch Zuschalten und Abschalten der Lichtquellen der beiden durch die vertikale Blende getrennten Fernlichtkammern kann man entweder ein volles Fernlicht (als Summe beider Teilfernlichtverteilungen) oder eine nur rechts helle oder nur links helle Teilfernlichtverteilung erzeugen, indem man nur die Lichtquelle einer der beiden Fernlichtkammern einschaltet. Die vertikale Blende zwischen den Teilfernlichtkammern kann lichtreflektierend beschichtet sein.

Die Fernlichtblende liegt so, dass die beiden Fernlichtkammern in Bezug auf eine durch den HV-Punkt laufende Vertikale achsensymmetrisch zueinander liegen, wobei die vertikalen Hell-Dunkel-Grenzen die sich als Bilder der vertikalen Blende ergeben, auf der Vertikalen liegen.

Die Aufgabe der Erfindung besteht in der Angabe eines verbesserten Projektionslichtmoduls der eingangs Art. Im Vergleich zum Stand der Technik ergeben sich insbesondere folgende Verbesserungswünsche: Mechanisch bewegte Komponenten sollen nach Möglichkeit vermieden werden, oder es soll zumindest ihre Zahl verringert werden. Es soll ein einfacher Aufbau trotz variabler Funktionalität erzielt werden. In diesem Zusammenhang sollen insbesondere voneinander verschiedene Teilfernlichtkomponenten einfach realisiert werden können. Es sollen hohe Beleuchtungsstärken und eine leichte Anpassbarkeit erzielt werden.

Diese Aufgabe wird mit den Merkmalen des Anspruchs 1 gelöst. Dabei unterscheidet sich die Erfindung von dem eingangs genannten Projektionslichtmodul dadurch, dass die Abblendlichtblende und die Fernlichtblende Teile einer in sich starren Verbundblende sind und dass die Fernlichtblende im Fernlichtvolumen schräg zu einer optischen Achse des Projektionslichtmoduls angeordnet ist, so dass ihr Abstand von einer optischen Achse des Projektionslichtmoduls mit längs der optischen Achse zunehmender Entfernung von der Blendenkante zunimmt.

Von den Lichtquellen aus betrachtet bedeutet dies, dass sich die Fläche der vertikalen Blende mit zunehmender Entfernung von den Lichtquellen der optischen Achse annähert. Für eine auf der der optischen Achse zugewandten Seite der vertikalen Blende angeordnete Lichtquelle bedeutet dies, dass von der Lichtquelle her auf die Seite der vertikalen Blende einfallendes und dort spiegelnd reflektiertes Licht nach der Reflexion einen größeren Winkel mit der optischen Achse einschließt als vor der Reflexion. Für dieses Licht wirkt die vertikale Blende daher vergrößernd auf den Öffnungswinkel des dort auftreffenden Lichtes ein.

Für eine auf der der optischen Achse abgewandten Seite der vertikalen Blende angeordnete Lichtquelle bedeutet dies, dass von der Lichtquelle her auf die Seite der vertikalen Blende einfallendes und dort spiegelnd reflektiertes Licht nach der Reflexion einen kleineren Winkel mit der optischen Achse einschließt als vor der Reflexion. Für dieses Licht wirkt die vertikale Blende daher verkleinernd auf den Öffnungswinkel des dort auftreffenden Lichtes ein. Das Maß der Vergrößerung und Verkleinerung ergibt sich dabei aus dem Winkel, den die Seite der Blende mit der optischen Achse einschließt.

Dies zeigt, dass die in Bezug auf die optische Achse erfindungsgemäß schräg verlaufende vertikale Blende zusätzliche Freiheitsgrade für das Erzeugen von Lichtverteilungen liefert, die beim Stand der Technik nicht vorhanden sind. Mit zwei trichterförmig aufeinander zulaufenden Fernlichtblenden kann außerdem das von einer Vorsatzoptik oder mehreren Vorsatzoptiken in die breite Trichteröffnung eingestrahlte Licht auf die schmale Trichteröffnung gelenkt werden, die bevorzugt in der Brennebene oder in einem vorgegebenen Abstand zur Brennebene liegt.

Eine bevorzugte Ausgestaltung zeichnet sich dadurch aus, dass die Abblendlichtblende sowohl an ihrer Oberseite als auch an ihrer Unterseite spiegelnd beschichtet ist.

Bevorzugt ist auch, dass eine der Sekundäroptik zugewandte vertikale Blendenkante der vertikalen Blende in horizontaler y-Richtung in einem lateralen Abstand dy zur optischen Achse des Lichtmoduls angeordnet ist.

Ferner ist bevorzugt, dass im Fernlichtvolumen wenigstens zwei Fernlichtblenden angeordnet sind, die jeweils eine mehr vertikal als horizontal verlaufende Blendenkante aufweisen und die im Fernlichtvolumen schräg zu einer optischen Achse des Projektionslichtmoduls so angeordnet sind, dass ihr Abstand von einer optischen Achse des Projektionslichtmoduls mit längs der optischen Achse zunehmender Entfernung von der Blendenkante zunimmt.

Bevorzugt ist auch, dass die schräg zur optischen Achse verlaufend angeordneten Fernlichtblenden auf einer Seite der optischen Achse liegen.

Eine weitere bevorzugte Ausgestaltung zeichnet sich dadurch aus, dass die schräg zur optischen Achse verlaufend angeordneten Fernlichtblenden auf verschiedenen Seiten der optischen Achse liegen, so dass eine rechts und eine andere links von der optischen Achse liegt.

Bevorzugt ist auch, dass zumindest Teile der mehr vertikal als horizontal verlaufenden Blendenkante der Fernlichtblende oder der mehr vertikal als horizontal verlaufenden Blendenkanten der Fernlichtblenden in der Brennebene der Projektionslinse liegen.

Bevorzugt ist auch, dass das Projektionslichtmodul mehrere Halbleiterlichtquellen und Licht der Halbleiterlichtquellen sammelnde und bündelnde Primäroptiken aufweist, die in dem Abblendlichtvolumen so angeordnet sind, dass das gebündelte Licht in einen Bereich konzentriert wird, in dem die horizontale Blendenkante liegt, und dass das Projektionslichtmodul mehrere weitere Halbleiterlichtquellen und Licht dieser Halbleiterlichtquellen sammelnde und bündelnde Primäroptiken aufweist, die in dem Fernlichtvolumen so angeordnet sind, dass ihr Licht in einen Bereich konzentriert wird, in dem die horizontale Blendenkante liegt. Den durch die schräg verlaufenden vertikalen Blenden erzeugten Teilfernlichtvolumina ist bevorzugt jeweils mindestens eine Halbleiterlichtquelle zugeordnet, die ihr Licht in das jeweilige Teilfernlichtvolumen abstrahlt. Durch einzeln oder gruppenweise erfolgendes Einschalten und Ausschalten dieser Halbleiterlichtquellen lassen sich die diesen Teilfernlichtvolumina zugeordneten Lichtbündel anschalten und abschalten. In jedem Teilfernlichtvolumen erzeugt wenigstens eine Licht individuell in dieses Teilfernlichtvolumen Licht einspeisende und individuell steuerbare Lichtquelle einen für jedes Teilfernlichtvolumen individuellen Strahlengang, so dass sich verschiedene Teilfernlichtverteilungen durch Ein- und Ausschalten der genannten Lichtquellen erzeugen lassen.

Eine weitere bevorzugte Ausgestaltung zeichnet sich dadurch aus, dass wenigstens eine einem Lichtbündel zugewandte Fläche einer schräg zur optischen Achse verlaufenden Fernlichtblende eine spiegelnde Beschichtung aufweist. Ferner ist bevorzugt, dass eine unmittelbar an eine mehr vertikal als horizontal angeordnete Blendenkante einer Fernlichtblende liegende Teilfläche der Fernlichtblende eine streuende Strukturierung aufweist.

Bevorzugt ist auch, dass wenigstens eine einem Lichtbündel zugewandte Fläche einer Fernlichtblende mehrere Facetten, beziehungsweise Reflektorsegmente aufweist.

Bevorzugt ist auch, dass eine weitere Fernlichtblende quer zur optischen Achse angeordnet ist.

Ferner ist bevorzugt, dass die Blendenkanten der Fernlichtblenden nicht in der gleichen Fläche liegen wie die Blendenkante der Abblendlichtblende.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:

Es zeigen;
- Figur 1: eine Summe einer Abblendlichtverteilung und einer Teilfernlichtverteilung;
- Figur 2: eine Summe von zwei Teilfernlichtverteilungen sowie der Abblendlichtverteilung eines Scheinwerferpaars;
- Figur 3: eine Darstellung eines Projektionslichtmoduls in einem Vertikalschnitt;
- Figur 4: eine Abblendlichtverteilung;
- Figur 5: eine volle Fernlichtverteilung;
- Figur 6: eine Vorderansicht der Zwischenbildebene eines einfachen Bifunktionslichtmoduls, das noch keine vertikale Fernlichtblende aufweist;
- Figur 7: eine Vorderansicht der Zwischenbildebene eines erfindungsgemäßen Bifunktionslichtmoduls, das eine vertikale Fernlichtblende aufweist;
- Figur 8: eine perspektivische Iso-Ansicht einer Komplexlichtquelle, einer Verbundblende und einer Sekundäroptik eines Ausführungsbeispiels eines erfindungsgemäßen Lichtmoduls;
- Figur 9: den Gegenstand der Figur 8 in einer perspektivischen Ansicht von schräg vorn und unten;
- Figur 10: eine Komplexlichtquelle mit einem zentralen Lichtbündel in einer Ansicht von schräg unten;
- Figur 11: eine durch Projektion aus diesem Bündel erzeugte Teilfernlichtverteilung;
- Figur 12: eine Komplexlichtquelle mit einem an das zentrale Lichtbündel angrenzenden weiteren Lichtbündel in einer Ansicht von schräg unten;
- Figur 13: eine resultierende, durch Projektion aus diesem Bündel erzeugte Teilfernlichtverteilung;
- Figur 14: eine Komplexlichtquelle mit einem an das weitere Lichtbündel angrenzenden äußeren Lichtbündel in einer Ansicht von schräg unten;
- Figur 15: eine resultierende, durch Projektion aus diesem Bündel erzeugte Teilfernlichtverteilung;
- Figur 16: eine Fernlichtverteilung eines Projektionslichtmoduls auf einer Einbauseite;
- Figur 17: eine Ausgestaltung einer Blende zur Erzeugung eines Abblendlichts und einer Teilfernlichtverteilung mit nur einer vertikalen Blendenkante in einer Ansicht von schräg unten und hinten;
- Figur 18: eine Zwischenbildebene einer Ausgestaltung, die zwei im Fernlichtvolumen liegende Kammern aufweist;
- Figur 19: eine Zwischenbildebene einer weiteren Ausgestaltung, die drei im Fernlichtvolumen liegende Kammern aufweist; und
- Figur 20: eine Zwischenbildebene einer weiteren Ausgestaltung, die eine Vielzahl im Fernlichtvolumen unterhalb der horizontalen Blende liegender Kammern aufweist.

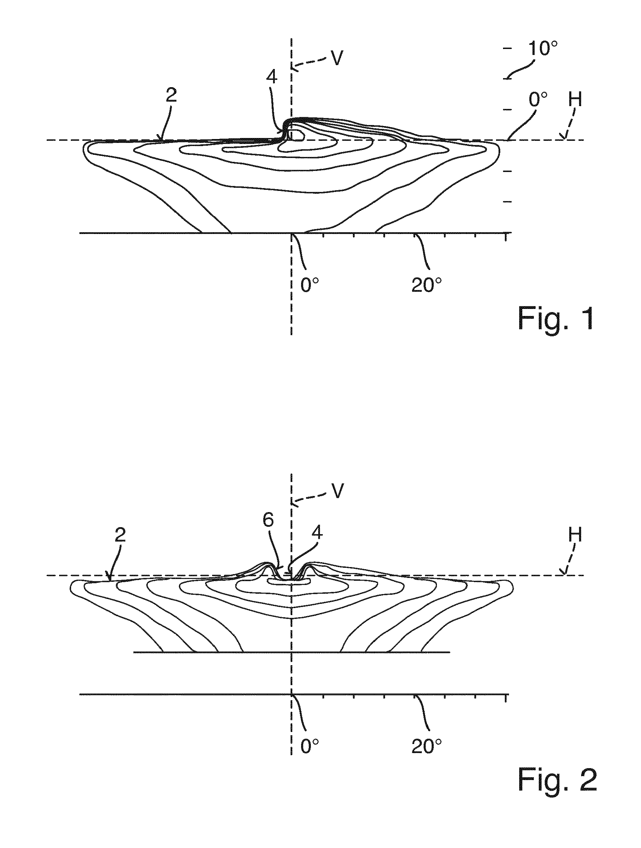

Die Figur 1 zeigt eine Lichtverteilung, die sich als Summe einer Abblendlichtverteilung mit zumindest abschnittsweise horizontal verlaufender Hell-Dunkel-Grenze 2 und einer Teilfernlichtverteilung mit abschnittsweise vertikal verlaufender Hell-Dunkel-Grenze 4 ergibt. Eine solche Lichtverteilung ergibt sich bei einer bestimmungsgemäßen Verwendung eines Projektionslichtmoduls für einen Kraftfahrzeugscheinwerfer bei einem in das Kraftfahrzeug eingebauten Scheinwerfer auf einem Schirm, der sich in Vorwärtsrichtung einige Meter vor dem Fahrzeug befindet und senkrecht zur Fahrbahn und zur Hauptabstrahlrichtung des Projektionslichtmoduls angeordnet ist.

Figur 1 zeigt insbesondere ein Abblendlicht mit Teilfernlicht, wie es durch einen für einen Einbau auf einer Fahrzeugseite vorgesehenen Scheinwerfer, beziehungsweise durch ein Lichtmodul eines solchen Scheinwerfers, erzeugt wird.

Wenn in der vorliegenden Anmeldung Richtungs- und Ortsangaben wie oben, unten, rechts und links verwendet werden, beziehen sich diese immer auf eine Lage des Projektionslichtmoduls bei dieser bestimmungsgemäßen Verwendung.

Ein zentraler Punkt einer solchen Lichtverteilung ist der sogenannte HV-Punkt, der sich als Schnittpunkt einer vertikalen Geraden V, welche die Hauptabstrahlrichtung kreuzt, mit einer auf der Höhe des Horizonts vor dem Fahrzeug liegenden horizontalen Gerade H ergibt. Die Zahlenangaben stellen jeweils Winkelabweichungen zu der Richtung dar, die senkrecht zum Schirm ist und durch den HV-Punkt geht. Der Scheitel des Winkels liegt jeweils im Projektionslichtmodul. Die geschlossenen Kurven sind Linien, längs derer die Helligkeit konstant ist. Die Helligkeit nimmt dabei von außen nach innen zu. Dies gilt für sämtliche in dieser Anmeldung dargestellten Lichtverteilungen.

Die Figur 2 zeigt eine Summe von zwei Teilfernlichtverteilungen sowie der weitgehend unterhalb des Horizonts, im negativen Bereich der Ordinatenwerte liegenden Abblendlichtverteilung von Projektionslichtmodulen der Scheinwerfer beider Anbauseiten (rechts und links im Fahrzeug) mit einem rechts und links durch vertikale Hell-Dunkel-Grenzen 4, 6 begrenzten Schatten im linken, zentralen Winkelbereich des Fernlichtes. Der Schatten wird dort erzeugt, wo sich andere Verkehrsteilnehmer befinden. Eine Blendung dieser Verkehrsteilnehmer, die sich hier auf der Gegenverkehrsseite befinden, kann dadurch vermieden werden.

Eine Positionierung des Schattens und eine Einstellung seiner Breite erfolgt durch automatisch gesteuertes Schwenken der Lichtmodule beider Seiten.

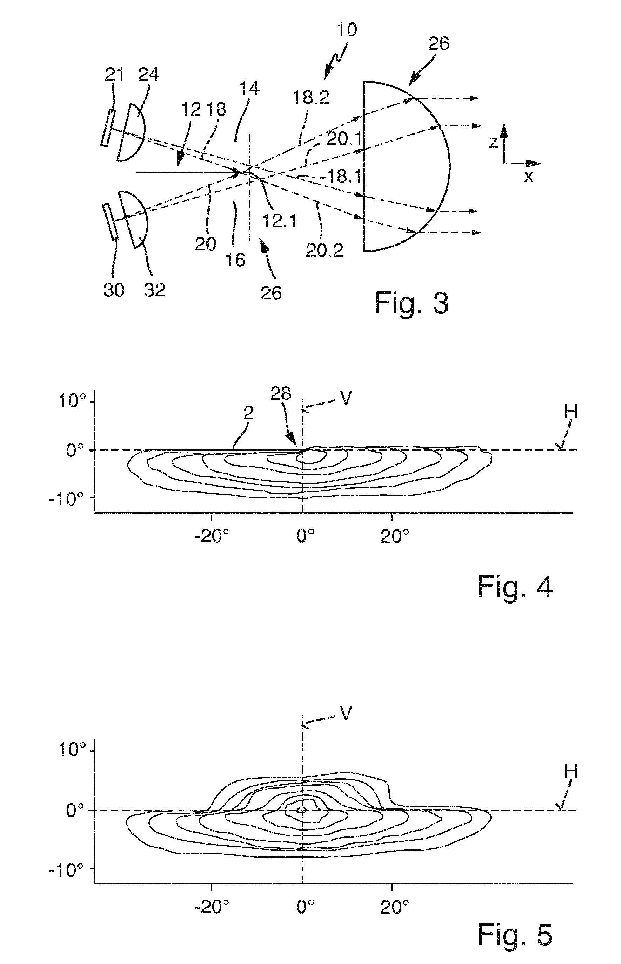

Die Figur 3 zeigt eine sehr stark schematisierte Darstellung eines Projektionslichtmoduls 10, das eine horizontal ausgerichtete Abblendlichtblende 12 aufweist, die das Projektionslichtmodul in ein oberes, zur Erzeugung eines Abblendlichtes eingerichtetes Abblendlichtvolumen 14, und ein unteres, zur Erzeugung eines Teilfernlichtes eingerichtetes Fernlichtvolumen 16 aufteilt. Das Abblendlichtvolumen ist das oberhalb der Blende 12 liegende Teilvolumen, in dem das oder die Abblendlichtstrahlengänge, beziehungsweise Abblendlichtbündel 18 verlaufen. Das Fernlichtvolumen ist das unterhalb der Blende 12 liegende Teilvolumen, in dem das oder die Fernlichtstrahlengänge, beziehungsweise Fernlichtbündel 20 verlaufen.

Das Lichtmodul 10 ist in einem Vertikalschnitt dargestellt. Die x-Richtung ist bei bestimmungsgemäßer Verwendung parallel zur Längsachse und die z-Achse ist dann parallel zur Fahrzeughochachse ausgerichtet.

Oberhalb der Abblendlichtblende 12 sind Abblendlichtquellen 21 und Licht der Abblendlichtquellen bündelnde und richtende Primäroptiken 24 angeordnet. Die Abblendlichtquellen sind bevorzugt Halbraumstrahler, insbesondere Halbleiterlichtquellen wie Leuchtdioden, die so angeordnet sind, dass ihre Hauptabstrahlrichtung zur Abblendlichtblende geneigt und auf die der Sekundäroptik zugewandten Blendenkante 12.1 der Abblendlichtblende gerichtet sind.

Jeder Lichtquelle ist eine Primäroptik, beispielsweise eine Linse, also ein im Wesentlichen Licht nur brechender transparenter Körper, oder ein alternativ oder zusätzlich zu brechenden Eigenschaften reflektierende Eigenschaften aufweisender transparenter Festkörper oder ein Hohlspiegel zugeordnet, der das Licht dieser Lichtquelle, und bevorzugt nur Licht dieser Lichtquelle, kollimiert und auf die Blendenkante 12.1 richtet.

Auf diese Weise entsteht an der Blendenkante 12.1 eine durch die Blendenkante begrenzte innere Lichtverteilung mit einer über der Blendenkante liegenden hellen Zone. Der Bereich, in dem die innere Lichtverteilung erzeugt wird, wird auch als Zwischenbildebene 26 bezeichnet.

Die innere Lichtverteilung wird durch die Sekundäroptik 26, die bevorzugt als Linse verwirklicht ist, als äußere Lichtverteilung in das Vorfeld des Projektionslichtmoduls 10 projiziert, wodurch sich zum Beispiel die in der Figur 4 dargestellte Abblendlichtverteilung ergibt. Die Hell-Dunkel-Grenze ist dabei ein Bild der Blendenkante. Die von der Abblendlichtquelle aus an der Blendenkante vorbeilaufenden Strahlen 18.1 und die an der bevorzugt mit einer spiegelnden Beschichtung versehenen Abblendlichtblende zunächst reflektierten Strahlen 18.2 werden von der Sekundäroptik im hellen Bereich der Lichtverteilung vereinigt, wodurch Lichtverluste, die durch die mittels der Abblendlichtblende erfolgenden Abschattung auftreten würden, minimiert werden. Die bis auf den Doppelknick 28 horizontal verlaufende Hell-Dunkel-Grenze 2 ergibt sich als Bild des Verlaufes der Blendenkante der Abblendlichtblende in der Zwischenbildebene 26.

In der Figur 3 sind unterhalb der Abblendlichtquelle Fernlichtquellen 30 und Licht dieser Fernlichtquellen bündelnde Primäroptiken 32 angeordnet. Für die Fernlichtquellen und ihre Primäroptiken gilt die funktionale Beschreibung der Abblendlichtquellen und deren Primäroptiken analog. Es ist aber nicht erforderlich, dass die Abblendlichtquellen und die Fernlichtquellen (austausschbar) gleiche Bauteile sind. Dies gilt analog für die jeweiligen Primäroptiken.

Die Fernlichtquellen erzeugen mit ihren Primäroptiken und der Blende an der Blendenkante eine durch die Blendenkante begrenzte innere Lichtverteilung mit einer unter der Blendenkante liegenden hellen Zone. Die innere Lichtverteilung wird auch hier in das Vorfeld des Projektionslichtmoduls projiziert, wodurch die in der Figur 4 dargestellte Abblendlichtverteilung zu der in der Figur 5 dargestellten vollen Fernlichtverteilung ergänzt wird. Der oberhalb der breiten Abblendlichtverteilung liegende Fernlichtbereich dieser vollen Lichtverteilung ist bevorzugt in horizontaler Richtung nur etwa halb so breit wie die Abblendlichtverteilung.

Auch bei dem Fernlichtanteil dieser Lichtverteilung ergibt sich eine im Wesentlichen horizontal liegende Hell-Dunkel-Grenze auf der Höhe des Horizonts. Diese Hell-Dunkel-Grenze begrenzt den Fernlichtanteil nach unten. Sie ist jedoch in der Figur 5 nicht sichtbar, weil der Fernlichtanteil bevorzugt genau an den Abblendlichtanteil angrenzt, wobei der Fernlichtanteil im Übrigen über dem Abblendlichtanteil liegt. Die von der Fernlichtquelle aus an der Blendenkante vorbeilaufenden Strahlen und die an der bevorzugt mit einer spiegelnden Beschichtung versehenen Unterseite der Blende zunächst reflektierten Stahlen 20.2 werden von der Sekundäroptik im hellen Bereich der Lichtverteilung vereinigt, wodurch Lichtverluste vermieden und die Effizienz des Projektionslichtmoduls im Vergleich zu unverspiegelten Ausführungsbeispielen vergrößert wird.

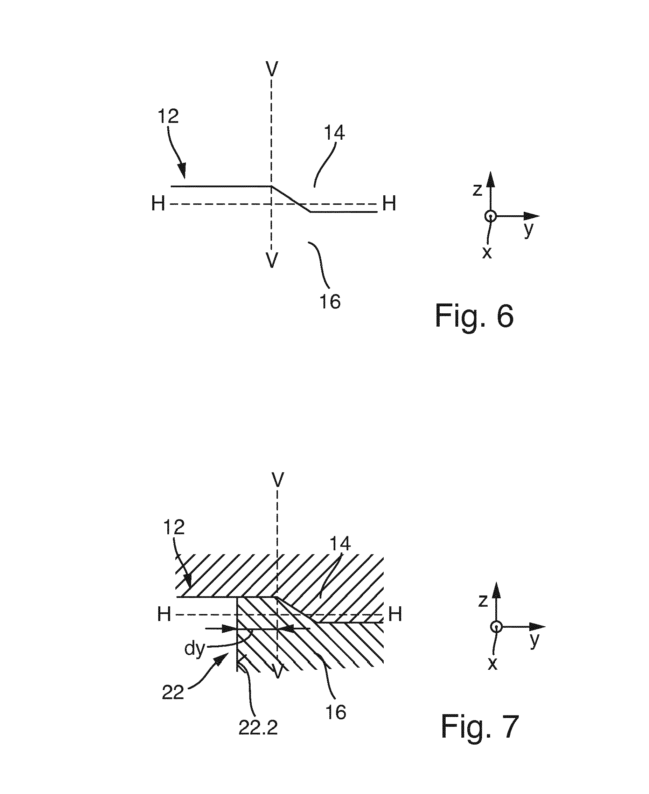

Die Figur 6 zeigt eine Vorderansicht der Zwischenbildebene 26 eines einfachen Bifunktionslichtmoduls, das noch keine vertikale Fernlichtblende aufweist, mit der Vertikalen V und der Horizontalen H eines von dem Lichtmodul beleuchteten Schirms. Die x-Richtung und die z-Richtung genügen der weiter oben verwendeten Definition. Die y-Richtung ist parallel zu einer Fahrzeugquerachse. Dies soll für alle Figuren in dieser Anmeldung gelten. Oberhalb der hier und auch bei der Erfindung beidseitig verspiegelten Abblendlichtblende 12 liegt das Abblendlichtvolumen. Unterhalb der Blende, von der hier nur die Blendenkante zu sehen ist, liegt das Fernlichtvolumen. Wenn nur die Fernlichtquellen eingeschaltet sind, ist nur das Fernlichtvolumen 16 mit Licht erfüllt.

Wenn nur die Abblendlichtquellen eingeschaltet sind, ergibt sich die Abblendlichtverteilung gemäß der Figur 4 durch die Abbildungseigenschaften der Sekundäroptik, welche die in der Zwischenbildebene auftretende innere Lichtverteilung unter Vertauschung von oben und unten in das Vorfeld des Projektionslichtmoduls abbildet.

Die Figur 7 zeigt eine Vorderansicht der Zwischenbildebene eines erfindungsgemäßen Bifunktionslichtmoduls, das im Vergleich zu dem in der Figur 6 dargestellten Lichtmodul zusätzlich noch eine vertikale Fernlichtblende 32 aufweist, mit der Vertikalen V und der Horizontalen H eines von dem Lichtmodul beleuchteten Schirms. Oberhalb der hier und auch bei der Erfindung beidseitig verspiegelten Abblendlichtblende liegt das Abblendlichtvolumen. Unterhalb der Blende, von der auch hier nur die Blendenkante zu sehen ist, liegt das Fernlichtvolumen.

In der dargestellten Ausgestaltung ist die der Sekundäroptik zugewandte vertikale Blendenkante in horizontaler y-Richtung in einem lateralen Abstand dy zum HV-Punkt und damit zur optischen Achse angeordnet. Die optische Achse steht senkrecht auf der Zwischenbildebene und läuft durch den HV-Punkt.

Aus dieser Vorderansicht der Zwischenbildebene mit der schraffiert dargestellten inneren Lichtverteilung, die sich bei eingeschaltetem Abblendlicht und eingeschalteter rechter (von vorn gesehen) Teilfernlichtquelle in der Zwischenbildebene einstellt, ergibt sich durch die Abbildungseigenschaften der Sekundäroptik, welche die in der Zwischenbildebene auftretende innere Lichtverteilung in das Vorfeld des Projektionslichtmoduls abbildet, eine Lichtverteilung, wie sie qualitativ in der Figur 1 dargestellt ist.

In einer bevorzugten Ausgestaltung liegen zumindest Teile der Vorderkante der zusätzlichen vertikalen Blende 22 bevorzugt in der Brennebene der Projektionslinse. Diese Brennebene ist die Zwischenbildebene 26. Diese Teile der Vorderkante der Blende 22 werden dann scharf als Hell-Dunkel-Grenze in den vor dem Scheinwerfer liegenden Verkehrsraum abgebildet. Diese vertikale Hell-Dunkel-Grenze liegt für den Rechtsanbau des Fahrzeugs in einem horizontalen Bereich von ca. -2° ... -10°, also etwas links von der Mitte, die durch den HV-Punkt markiert wird. Dadurch gibt es bei vollem Fernlicht in einem zentralen Bereich um die Längsachse des Fahrzeuges herum eine gute Überlagerung der Lichtverteilungen aus dem rechten und linken Scheinwerfer.

Das Helligkeitsmaximum einer Fernlicht-Charakteristik liegt üblicherweise im HV-Punkt. Dadurch findet man das Helligkeitsmaximum der oben beschriebenen Teilfernlichtverteilung, deren vertikale Hell-Dunkel-Grenze auf der horizontalen Achse bei -2° bis -10° liegt, nicht direkt an dieser vertikalen Hell-Dunkel-Grenze, sondern ein paar Grad daneben. Dies führt zum Beispiel beim Teilfernlichtbetrieb zu einer geringeren Reichweite des Teilfernlichtbündels an der Hell-Dunkel-Grenze als dann, wenn das Helligkeitsmaximum dichter an der Hell-Dunkel-Grenze liegt. Um das Helligkeitsmaximum möglichst dicht an der vertikalen Hell-Dunkel-Grenze zu erzeugen, ist die der optischen Achse des Projektionslichtmoduls zugewandte Teilfläche 22.2 der vertikalen Blende 22 bevorzugt zumindest teilweise verspiegelt und entweder eben oder speziell geformt, um eine optische Wirkung zu erreichen und den gespiegelten Lichtstrom gezielt zu verteilen.

Durch eine solche Verspiegelung der Fläche ergibt sich in Verbindung mit einer lichttechnisch vorteilhaften Formgebung dieser Blende 22 ein weiterer Freiheitsgrad bei der Konstruktion des Lichtmoduls, der eine Verbesserung der lichttechnischen Eigenschaften ermöglicht. Dies ergibt sich durch die Möglichkeit, die dann auch als Reflektor dienende Seitenfläche 22.2 der vertikalen Blende 22 dazu zu verwenden, dort auftreffendes Licht sowohl in der vertikalen als auch in horizontaler Richtung in erwünschte Richtungen umzulenken.

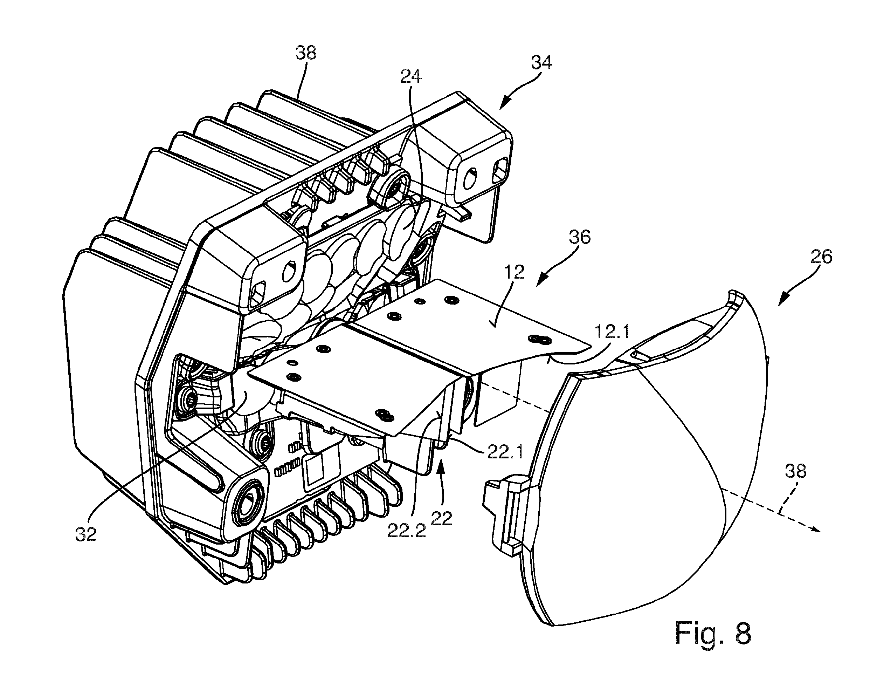

An der vertikalen Kante der Lichtverteilung soll sich nicht nur eine möglichst hohe Lichtstärke (Helligkeit), sondern auch ein weicher Gradient der Helligkeit ergeben, damit diese Hell-Dunkel-Grenze im vollen Fernlichtbetrieb, in dem sich die Hell-Dunkel-Grenze des Teilfernlichtes der rechten Anbauseite bevorzugt im hellen Bereich des Teilfernlichtes der linken Anbauseite befindet, möglichst unauffällig ist. Um dies zu gewährleisten, sieht eine bevorzugte Ausgestaltung eine Strukturierung (z.B. eine Mattierung) der vordersten Kante 22.1 der vertikalen Blende, beziehungsweise der unmittelbar an die Vorderkante angrenzenden Seitenfläche 22.2 der vertikalen Blende vor. Dies ist in der Figur 8 schematisch dargestellt. Mit einer solchen Strukturierung, welche die spiegelnde Beschichtung in einem schmalen Bereich, dessen Breite bevorzugt kleiner als 2 mm ist, ersetzt, wird eine streuende Wirkung und damit der angestrebte weiche Verlauf der Helligkeit rechts und links von der Hell-Dunkel-Grenze erreicht.

Eine weitere Ausgestaltung zeichnet sich dadurch aus, dass die zur optischen Achse des Moduls gerichtete Seite einer schräg zur optischen Achse verlaufenden vertikalen Blende mehrere Facetten, beziehungsweise Reflektorsegmente aufweist. Bevorzugt ist auch, dass diese Facetten, beziehungsweise Reflektorsegmente unterschiedliche Reflexionseigenschaften aufweisen.

Die Figur 8 zeigt eine perspektivische Iso-Ansicht einer Komplexlichtquelle 34, einer Blendenanordnung 36 und einer Sekundäroptik eines Ausführungsbeispiels eines erfindungsgemäßen Lichtmoduls. Die Komplexlichtquelle weist hier einen Kühlkörper, eine Vielzahl von Halbleiterlichtquellen und Primäroptiken 24, 32 auf, die zu einer baulichen Einheit zusammengefasst sind. Die gestrichelte Linie stellt eine optische Achse 38 des Lichtmoduls dar. Die Ansicht erfolgt von vorn und oben. Von den Primäroptiken 24, 32, die hier als lichtbrechende und zusätzlich mit internen Totalreflexionen arbeitende transparente Festkörper verwirklicht sind, sieht man im Wesentlichen die Lichtaustrittsflächen. Die Halbleiterlichtquellen sind hier durch die Primäroptiken verdeckt. Bevorzugt wirkt je eine Halbleiterlichtquelle mit je einer Primäroptik zusammen, so dass jede Primäroptik Licht von genau einer Halbleiterlichtquelle kollimiert und Licht von jeweils einer Halbleiterlichtquelle nur in jeweils eine Primäroptik eingespeist wird.

Die Verbundblende 36 weist eine Abblendlichtblende 12 mit einer Abblendlichtblendenkante 12.1 auf, die im Wesentlichen horizontal verläuft und die im Bereich der optischen Achse eine durch zwei Knicke abgegrenzte Stufe aufweist, mit der die bekannte Asymmetrie der Abblendlichtverteilung erzeugt wird. Die in der Fig. 8 sichtbare Oberfläche der Blende 12 ist bevorzugt verspiegelt. Ein Teil der Halbleiterlichtquellen ist zusammen mit der jeweils zugehörigen Primäroptik in dem Abblendlichtvolumen so angeordnet, dass das Licht in einen Bereich an der Blendenkante konzentriert wird, wodurch in der Zwischenbildebene die innere Lichtverteilung entsteht, die von der Sekundäroptik als Abblendlichtverteilung projiziert wird.

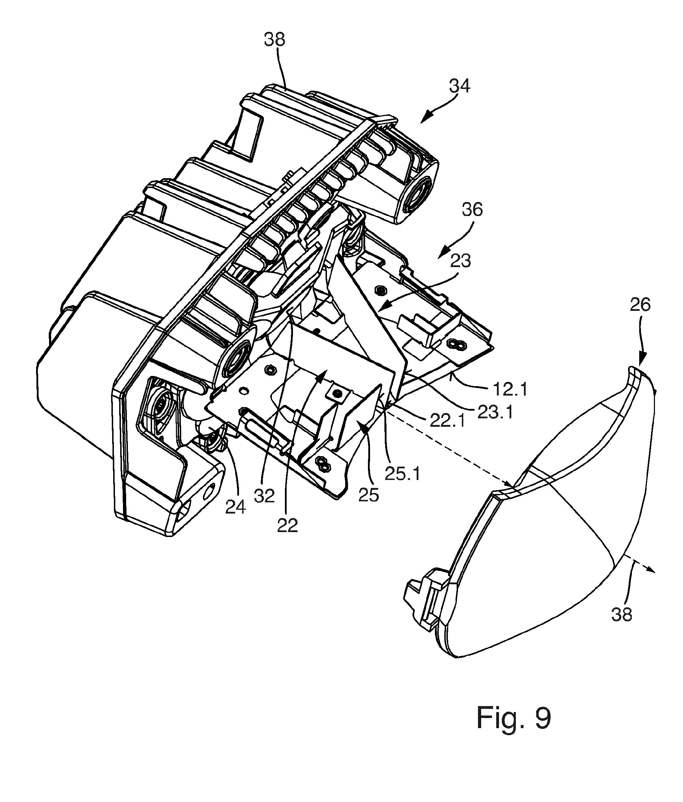

Ein weiterer Teil der Halbleiterlichtquellen ist zusammen mit der jeweils zugehörigen Primäroptik in dem unter der Blende liegenden Fernlichtvolumen so angeordnet, dass ihr Licht in einen Bereich an der Blendenkante konzentriert wird, wodurch in der Zwischenbildebene die innere Lichtverteilung entsteht, die von der Sekundäroptik als Fernlichtverteilung oder Teilfernlichtverteilung projiziert wird, je nachdem, welche Lichtquellen eingeschaltet sind. Diese Lichtquellen werden im Folgenden auch als Fernlichtquellen bezeichnet. Auf die vertikalen Blenden 22 wird bei der Beschreibung der Figur 9 eingegangen.

Figur 9 zeigt den Gegenstand der Figur 8 in einer perspektivischen Ansicht von schräg vorn und unten und stellt damit insbesondere das Fernlichtvolumen dar. In diesem Ausführungsbeispiel weist die Verbundblende 36 zusätzlich zu ihrem horizontalen Teil 12 vertikale Blenden 22, 23 auf, welche das Fernlichtvolumen in die Teilvolumina unterteilen. Jede der vertikalen Fernlichtblenden teilt das Fernlichtvolumen in ein bei der genannten Verwendung rechts der jeweiligen Fernlichtblende liegende rechtes Fernlichtvolumen und ein links der jeweiligen Fernlichtblende liegendes linkes Fernlichtvolumen, wobei die Blendenkante so angeordnet ist, dass sie von der Sekundäroptik als mehr vertikal als horizontal verlaufende Hell-Dunkel-Grenze in der äußeren Lichtverteilung abgebildet wird. In dieser Anmeldung ist darunter zu verstehen, dass der Winkel, den die Blendenkante bei bestimmungsgemäßer Verwendung des Lichtmoduls mit der Vertikalen einschließt, kleiner ist als der Winkel, den die Blendenkante mit der Horizontalen einschließt. Die Abblendlichtblende 12 und die Fernlichtblende(n) 22, 23 bilden einen in sich starren Verbund in Form der Verbundblende 36, und die Fernlichtblenden 22, 23 sind so im Fernlichtvolumen angeordnet, dass ihr Abstand von einer optischen Achse 38 des Projektionslichtmoduls mit längs der optischen Achse zunehmender Entfernung von der Blendenkante 22.1, beziehungsweise 23.1 für die Blende 23, zunimmt.

In der dargestellten Ausgestaltung liegen sowohl die Abblendlichtblendenkante 12.1 als auch die Blendenkanten 22.1, 23.1 der Fernlichtblenden 22, 23 in einer Brennfläche der Sekundäroptik 26 und werden daher als scharfe Hell-Dunkel-Grenzen abgebildet. Eine weitere Fernlichtblende 25 ist quer zur optischen Achse 38 angeordnet. Diese Fernlichtblende besitzt zwar eine optisch wirksame Blendenkante 25.1, aber aufgrund ihrer Ausrichtung besitzt sie keine den Strahlengang beeinflussende Wirkung, die über eine Abschattungswirkung hinausgeht. Die anderen beiden Fernlichtblenden 22, 13 verlaufen dagegen nicht quer, sondern schräg zur optischen Achse 38 des Lichtmoduls, beziehungsweise schräg zur damit identischen optischen Achse 38 der Komplexlichtquelle 34. Jede dieser beiden anderen schräg zur optischen Achse 38 verlaufend angeordneten Fernlichtblenden 22, 23 liegt auf einer Seite der optischen Achse 38 und kreuzt die optische Achse 38 dabei nicht. Die beiden schräg zur optischen Achse verlaufend angeordneten Fernlichtblenden 22, 23 liegen dabei auf verschiedenen Seiten der optischen Achse 38, so dass die eine rechts und die andere links von der optischen Achse 38 liegt. Je zwei der drei Fernlichtblenden 22, 23, 25 begrenzen ein Teilfernlichtbündel, beziehungsweise einen Teilfernlichtstrahlengang. Die dem jeweiligen Teilfernlichtbündel jeweils zugewandte Seite einer schräg zur optischen Achse verlaufenden Fernlichtblende 22, 23 ist bevorzugt verspiegelt. In einem schmalen, unmittelbar an die Blendenkante angrenzenden Bereich ist die Blendenfläche bevorzugt streuend strukturiert, zum Beispiel mattiert. Die Breite des streuend strukturierten Bereiches ist bevorzugt kleiner als 2 mm, insbesondere kleiner als 1 mm. Dies ist in der Figur 8 dargestellt.

Längs der Abblendlichtkante 12.1 ergeben sich hier, das heißt beim Gegenstand der Figuren 8 und 9, drei vertikale Teilfernlicht-Blendenkanten 25.1, 22.1, 23.1 und damit drei voneinander verschiedene Teilfernlichtvolumina. In jedem Teilfernlichtvolumen erzeugt wenigstens eine Licht individuell in dieses Teilfernlichtvolumen Licht einspeisende und individuell steuerbare Lichtquelle einen für jedes Teilfernlichtvolumen individuellen Strahlengang, so dass sich verschiedene Teilfernlichtverteilungen durch Ein- und Ausschalten der genannten Lichtquellen erzeugen lassen.

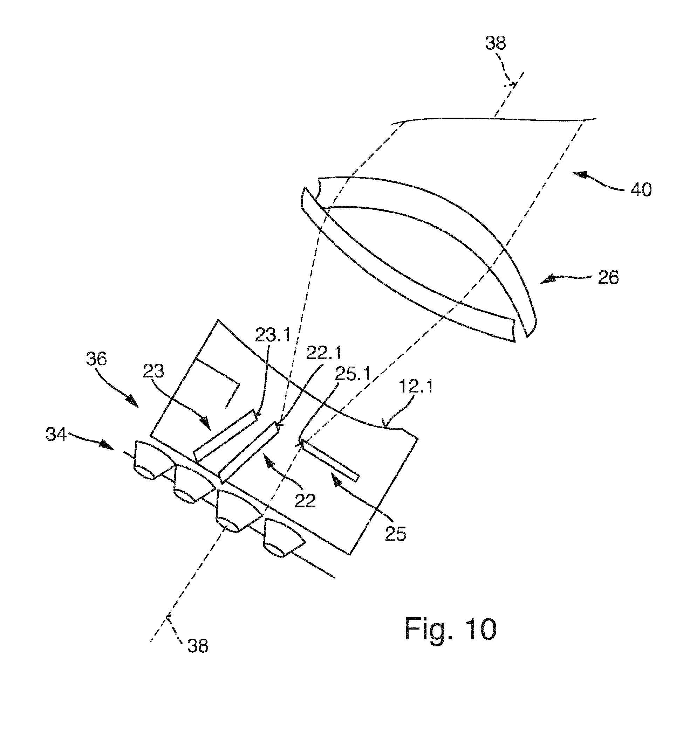

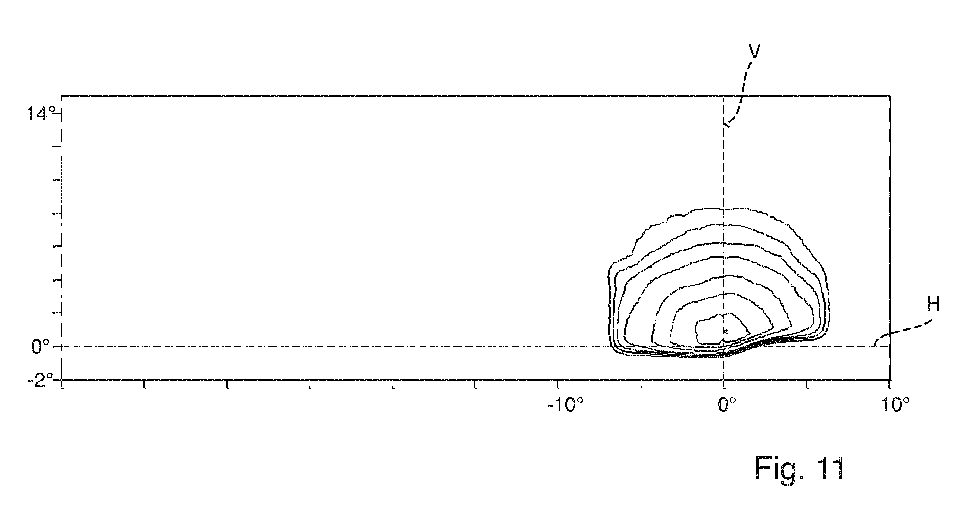

Dies wird im Folgenden unter Bezug auf die Figuren 10 bis 16 näher erläutert. Dabei zeigen die Figuren 10, 12 und 14 jeweils Strahlengänge einer Ausgestaltung einer Komplexlichtquelle eines Ausführungsbeispiels eines erfindungsgemäßen Projektionslichtmoduls, und die Figuren 11, 13, 15 und 16 zeigen sich daraus jeweils ergebende Teilfernlichtverteilungen.

Die in den Figuren 10, 12 und 14 verwendete Blickperspektive ähnelt der Blickperspektive der Figur 9 und zeigt eine Komplexlichtquelle jeweils im Wesentlichen von unten. Die in den Figuren 10, 12 und 14 dargestellten Ausgestaltungen unterscheiden sich von der Ausgestaltung, die in den Figuren 8 und 9 dargestellt sind, durch zwei Merkmale.

Ein erster Unterschied besteht darin, dass die Blendenkanten der vertikalen Fernlichtblenden bei dem Gegenstand der Figuren 10, 12 und 14 nicht in der gleichen Fläche liegen wie die Blendenkante Abblendlichtblende. Unter der bevorzugt erfüllten Voraussetzung, dass die Blendenkante 12.1 der Abblendlichtblende in der Brennfläche der Sekundäroptik liegt, ergibt sich damit eine defokussierte Anordnung der vertikalen Blendenkanten. Diese Blendenkanten werden daher nicht scharf abgebildet, so dass sich bei dieser Ausgestaltung ein weniger steiler Verlauf des Helligkeitsgradienten über der Hell-Dunkel-Grenze ergibt als bei einer scharfen Abbildung.

Ein zweiter Unterschied ergibt sich daraus, dass die beiden schräg zur optischen Achse verlaufenden vertikalen Blenden 22, 23 hier auf derselben Seite der optischen Achse 38 angeordnet sind. Im Übrigen gilt die Beschreibung der Gegenstände der Figuren 8 und 9 auch für die Gegenstände der Figuren 10, 12 und 14, so dass diese Beschreibungsteile nicht wiederholt werden.

Die Figur 10 zeigt im Einzelnen eine Komplexlichtquelle 34 mit einem zentralen Lichtbündel 40, das von einem Verbund einer zentralen Lichtquelle und einer zentralen Primäroptik erzeugt und durch eine erste vertikale Blendenkante 25.1 und eine zweite vertikale Blendenkante 22.1 rechts und links begrenzt wird.

Die Figur 11 zeigt eine resultierende, durch Projektion aus diesem Bündel erzeugte Teilfernlichtverteilung 41, die rechts und links von einer scharfen, vertikalen Hell-Dunkel-Grenze begrenzt wird. Die rechte Hell-Dunkel-Grenze in der Figur 11 ergibt sich dabei als Bild der rechten Blendenkante 25.1 aus der Figur 10, da die Sekundäroptik 26 oben und unten und rechts und links vertauscht und die Figur eine Ansicht von unten darstellt. Die von dem zentralen Lichtbündel erzeugte Teilfernlichtverteilung ist in der Horizontalen bevorzugt 10° bis 15° breit und abgesehen von einer durch die Blendenkante der Abblendlichtverteilung erzeugten Asymmetrie symmetrisch zu einer mittleren Vertikalen, die bevorzugt durch den HV-Punkt geht.

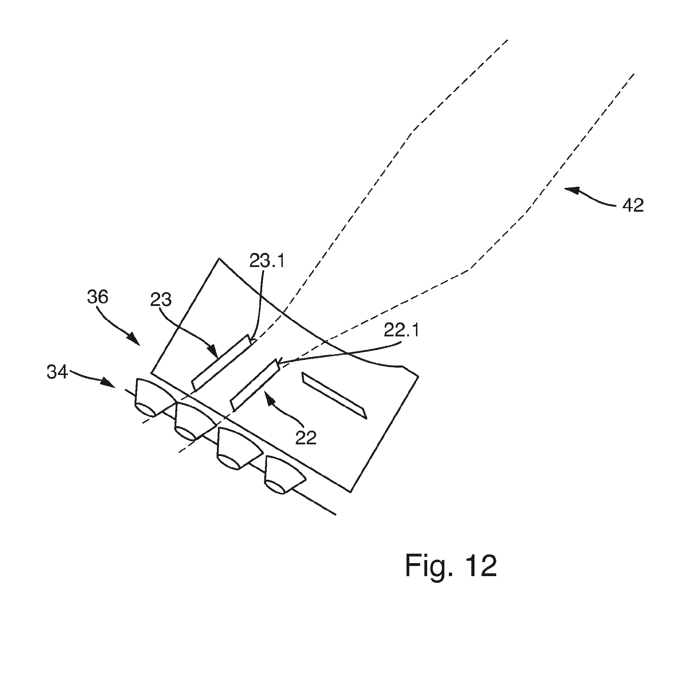

Die Figur 12 zeigt im Einzelnen eine Komplexlichtquelle 34 mit einem an das zentrale Lichtbündel angrenzenden und/oder das zentrale Lichtbündel 40 überlappenden weiteren Lichtbündel 42, das von einem Verbund einer neben der zentralen Lichtquelle angeordneten weiteren Lichtquelle und einer von dieser weiteren Lichtquelle gespeisten weiteren Primäroptik erzeugt und durch die zweite vertikale Blendenkante 22.1 und eine dritte vertikale Blendenkante 23.1 rechts und links begrenzt wird.

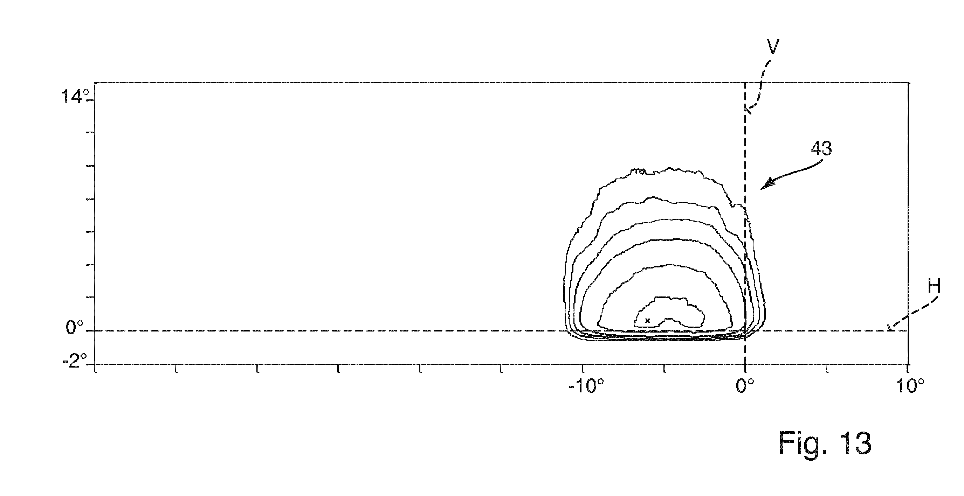

Die Figur 13 zeigt eine resultierende, durch Projektion aus diesem Bündel erzeugte Teilfernlichtverteilung 43, die rechts und links von einer scharfen, vertikalen Hell-Dunkel-Grenze begrenzt wird. Die rechte Hell-Dunkel-Grenze in der Figur 13 ergibt sich dabei als Bild der rechten Blendenkante 22.1 aus der Figur 12, da die Sekundäroptik oben und unten und rechts und links vertauscht. Die von dem weiteren Lichtbündel 42 erzeugte Teilfernlichtverteilung ist in der Horizontalen bevorzugt 10° bis 15° breit und abgesehen von einer durch die Blendenkante der Abblendlichtverteilung erzeugten Asymmetrie symmetrisch zu einer mittleren Vertikalen, die gegenüber dem HV-Punkt bevorzugt um die Hälfte der Breite der Teilfernlichtverteilung versetzt ist. Dadurch wird eine Überlappung der weiteren Teilfernlichtverteilung und der zentralen Lichtverteilung erzielt, bei welcher der Überlappungsbereich etwa halb so breit ist wie eine der beiden bevorzugt etwa gleich breiten Teilfernlichtverteilungen.

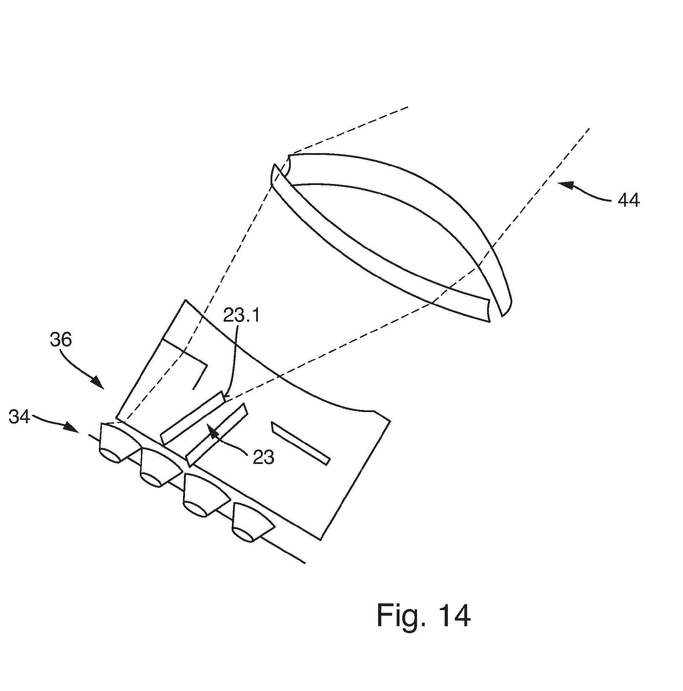

Die Figur 14 zeigt im Einzelnen eine Komplexlichtquelle 34 mit einem an das weitere Lichtbündel angrenzenden und/oder das weitere Lichtbündel 43 überlappenden äußeren Lichtbündel 44, das von einem Verbund einer neben der weiteren Lichtquelle angeordneten äußeren Lichtquelle und einer mit dieser äußeren Lichtquelle gespeisten äußeren Primäroptik erzeugt und rechts durch eine dritte vertikale Blendenkante 23.1 begrenzt wird. Auf der der rechten Seite gegenüberliegenden linken Seite des Lichtbündels wird das Lichtbündel in dieser Ausgestaltung nicht begrenzt.

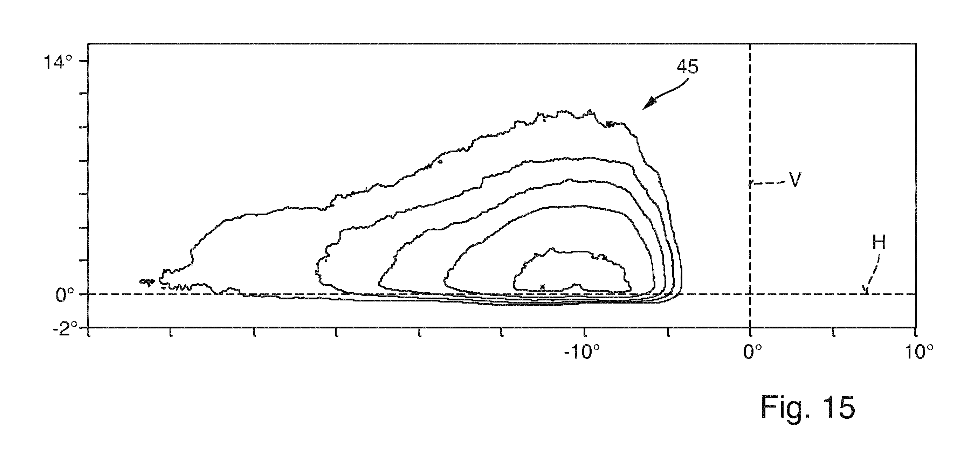

Die Figur 15 zeigt eine resultierende, durch Projektion aus diesem Bündel 44 erzeugte Teilfernlichtverteilung 45, die rechts von einer scharfen, vertikalen Hell-Dunkel-Grenze begrenzt wird und deren Helligkeit nach links weich auslaufend allmählich geringer wird. Die rechte Hell-Dunkel-Grenze in der Figur 15 ergibt sich dabei als Bild der rechten Blendenkante 23.1 aus der Figur 14, da die Sekundäroptik oben und unten und rechts und links vertauscht. Die von dem äußeren Lichtbündel 44 erzeugte Teilfernlichtverteilung 45 ist in der Horizontalen bevorzugt 30° bis 45° breit. Ihre rechte Hell-Dunkel-Grenze liegt bevorzugt in der Mitte der angrenzenden weiteren Teilfernlichtverteilung 43.

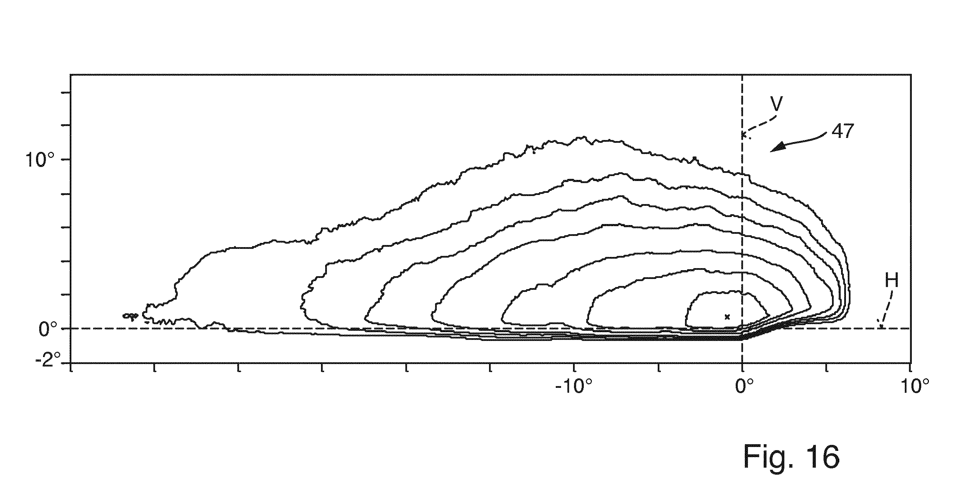

Die Figur 16 zeigt eine Fernlichtverteilung 47 (jedoch ohne Abblendlichtanteil) eines Projektionslichtmoduls auf einer Einbauseite (hier links), wie sie sich ergibt, wenn sämtliche Fernlicht-Lichtquellen des Projektionslichtmoduls eingeschaltet sind. Eine volle Fernlichtverteilung ergibt sich daraus durch Zuschalten der Abblendlichtverteilung. Durch Ausschalten und/oder Dimmen der Lichtquellen einzelner Lichtbündel 41, 43, 45 lässt sich die Helligkeit in dem von dem jeweiligen Lichtbündel beleuchteten Bereich der Fernlichtverteilung verringern, um eine Blendung anderer Verkehrsteilnehmer, die sich in diesem Bereich befinden, zu verhindern oder zumindest zu verringern. Dies erfolgt bevorzugt automatisch gesteuert durch Auswertung eines Kamerabildes (z.B. des Bildes einer Infrarotkamera), was als solches bekannt ist. Das mit Bezug auf die Figuren 10 bis 16 beschriebene Ausführungsbeispiel betrifft ein Projektionslichtmodul für die linke Einbauseite. Für die rechte Einbauseite ergibt sich bevorzugt eine bezüglich der Vertikalen V-V spiegelbildliche Realisierung.

Das unter Bezug auf die Figuren 10 bis 16 beschriebene Projektionslichtmodul weist eine starre Verbundblende 36 mit einer durchgehenden horizontalen Spiegelblende 12 und mindestens zwei starr sowohl miteinander als auch mit der horizontalen Spiegelblende verbundene vertikale Blenden 22, 23 auf. Mehrere einzeln schaltbare Lichtquellen, die bevorzugt Halbleiterlichtquellen sind und deren Lichtbündel 40, 42, 44 jeweils von einer Vorsatzoptik umgeformt und/oder gerichtet werden, strahlen oberhalb (für das Abblendlicht) und unterhalb (für das Fernlicht) der Blende 12 sowie rechts und/oder links von den vertikalen Blenden 22, 23, 25 in Richtung der Projektionslinse/Sekundäroptik mit einer Konzentrationszone nahe der Blendenkante 12.1 der horizontalen Blende 12 . Wenigstens zwei der senkrechten Blenden verlaufen, von den Lichtquellen aus betrachtet, schräg auf die optische Achse zu und befinden sich bei einem Projektionslichtmodul immer auf einer Seite der optischen Achse. Bei dem für die andere Einbauseite eingerichteten Projektionslichtmodul befinden sich die Blenden auf der anderen Seite. Die wenigstens zwei vertikalen und schräg auf die optische Achse zulaufenden Blenden 22, 23 enden bei einer Ausgestaltung, wie sie in den Figuren 10, 12 und 14 dargestellt ist, mit deutlichem Abstand (größer als 10 mm) zur vorderen, der Sekundäroptik zugewandten Kante 12.1 der horizontalen Blende 12, so dass ihre vorderen Kanten 22.1, 23.1 etwas unscharf abgebildet werden und sich die einzelnen Teilfernlichtbündel somit bei gleichzeitiger Aktivierung ihrer Lichtquellen homogen miteinander überlappen. Unerwünschte Streulichtstrahlengänge werden bei einer bevorzugten Ausgestaltung durch Streulichtblenden 25 abgeschattet, die bevorzugt quer zur optischen Achse angeordnet sind.

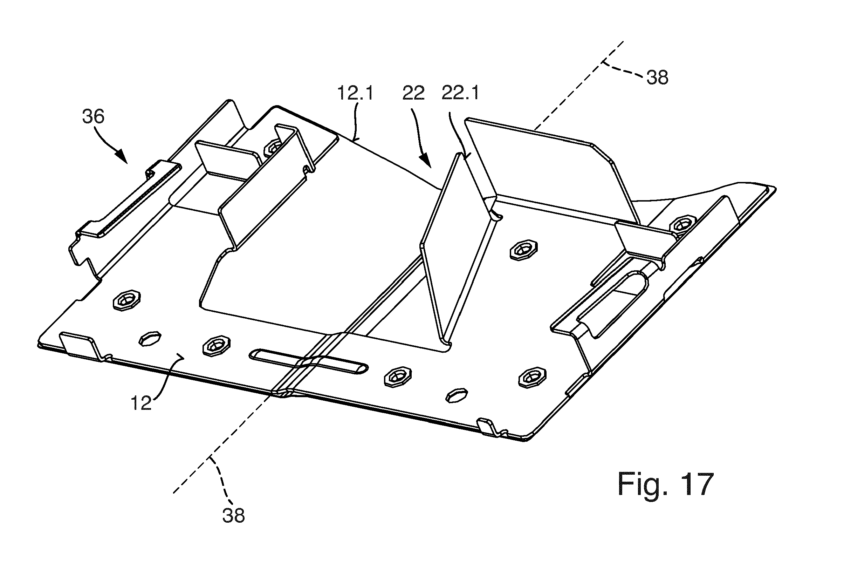

Die Figur 17 zeigt eine Ausgestaltung einer Verbundblende, die in Kombination mit den übrigen bis hier beschriebenen Komponenten eines Projektionslichtmoduls zur Erzeugung eines Abblendlichts und einer Teilfernlichtverteilung mit nur einer vertikalen Blendenkante 22.1 eingerichtet ist. Dadurch ergibt sich ein Projektionslichtmodul, das eine starre Verbundblende 36 mit einer durchgehenden horizontalen Spiegelblende 12 und mindestens einer starr mit dieser verbundenen vertikalen Blende 22 aufweist.

Auch hier strahlen mehrere einzeln schaltbare Lichtquellen, die bevorzugt Halbleiterlichtquellen sind und deren Lichtbündel jeweils von einer Vorsatzoptik umgeformt und/oder gerichtet werden, oberhalb und unterhalb von der horizontalen Blende 12 sowie hier links von der vertikalen Blende 22 in Richtung der Projektionslinse mit einer Konzentrationszone nahe der Blendenkante 12.1 der horizontalen Blende.

Die eine vertikale Blendenkante 22.1 aufweisende vertikale Blende 22 verläuft, von der Lichtquellen aus betrachtet, schräg auf die optische Achse 38 zu und endet bevorzugt im Bereich des Blendenknickpunktes der horizontalen Blende 12, so dass ihre vordere, optisch wirksame Blendenkante 22.1 scharf als vertikale Hell-Dunkel-Grenze abgebildet wird. Eine quer zur optischen Achse 38 verlaufende Streulichtblende 25 dient hier zur Abschattung unerwünschter Streulichtstrahlengänge. Eine vertikale Blendenkante der Streulichtblende liegt hier in einer Verlängerung der vertikalen Blende und liefert damit eine Schattenlinie, die mit der Schattenlinie der vertikalen Blenden kante 22.1 übereinstimmt. Die in der Figur 17 dargestellte Ausgestaltung zeichnet sich dadurch aus, dass jedes Projektionslichtmodul nur eine Teilfernlichtkammer aufweist. In diesem Fall ist bevorzugt, dass auch im Teilfernlicht alle Fernlicht-Lichtquellen der KomplexLichtquelle eingeschaltet werden, so dass ein größerer Lichtstrom zur Verfügung steht als beim Gegenstand nach der DE 10 2011 012 742 A1. Dies setzt voraus, dass das Licht sämtlicher Fernlicht-Lichtquellen von den Vorsatzoptiken auf einer Seite der einzigen vertikalen Blende zusammengefasst wird. Beim Gegenstand der Figur 17 wäre dies die vom Betrachter aus linke Seite.

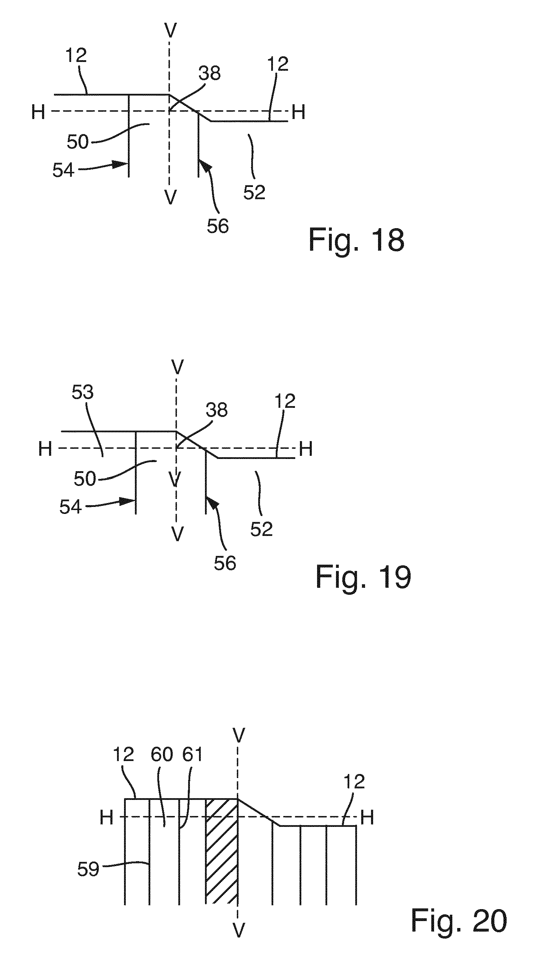

Die Figur 18 zeigt eine Zwischenbildebene einer weiteren Ausgestaltung von vorn, also aus einer der Abstrahlrichtung entgegengesetzten Blickrichtung. Diese Ausgestaltung zeichnet sich dadurch aus, dass sie zwei im Fernlichtvolumen unterhalb der horizontalen Blende verlaufende Kammern oder Fernlichtteilvolumina 50, 52 aufweist. Eine zentrale Kammer 50, in welcher die den HV-Punkt durchstoßende optische Achse 38 verläuft, dient zur Erzeugung eines Markierungsspots. Daran schließt sich rechts eine Teilfernlichtkammer 52 an. Die Kammern 50, 52 werden durch vertikale Blenden 54, 56 begrenzt, die ähnlich wie die Blenden 22, 23 ausgestaltet sind und zusammen mit der horizontalen Blende 12 eine in sich starre Verbundblende bilden. Auch hier gilt, dass die einem Lichtbündel zugewandten Seiten der Blenden, sei es die horizontale Blende 12 oder die vertikalen Blenden 54, 56, jeweils verspiegelt sind, wobei auch hier streuende Strukturierungen verwendet werden können, wie sie weiter oben unter Bezug auf die Figur 8 erläutert worden sind. Dies gilt im Übrigen für sämtliche in dieser Anmeldung dargestellten Ausführungsbeispiele.

Die Figur 19 zeigt eine Zwischenbildebene einer weiteren Ausgestaltung. Diese Ausgestaltung zeichnet sich dadurch aus, dass sie drei im Fernlichtvolumen unterhalb der horizontalen Blende 12 verlaufende Kammern 53, 50, 52 aufweist. Eine zentrale Kammer 50 dient zur Erzeugung eines Markierungsspots. Daran schließt sich rechts und links jeweils eine Teilfernlichtkammer 53, 52 an. In diesem Fall sind im Fernlichtbereich alle drei Kammern unabhängig voneinander schaltbar. Damit kann die Markierungsfunktion erfüllt werden, mit der in Verbindung mit einer per se bekannten Infrarot-Nachtsichtfunktion zum Beispiel ein Fußgänger erkannt und markiert, das heißt, separat angeleuchtet werden kann. Eine Horizontaldrehung des Projektionslichtmoduls, wie sie als solche durch Kurvenlichtmodule bereits weit im Markt verbreitet ist, sorgt für die korrekte Ausrichtung des Streifens auf den Fußgänger. Es kann aber auch ein Teilfernlicht rechts oder links oder auch gemeinsam gleichzeitig rechts und links aktiviert werden.

Dadurch erhöht sich die lichttechnische Leistungsvermögen des Projektionslichtmoduls entscheidend, da dann gleichzeitig beide Scheinwerfer in bestimmten Fahrsituationen rechts und links z.B. neben einem vorausfahrenden Fahrzeug den Fernlichtbereich aktivieren können.

Die Figur 20 zeigt eine Zwischenbildebene einer weiteren Ausgestaltung. Diese Ausgestaltung zeichnet sich dadurch aus, dass sie eine Vielzahl im Fernlichtvolumen unterhalb der horizontalen Blende 12 verlaufende Kammern 60 aufweist, die jeweils durch eine vertikale Fernlichtblende 59, 61 voneinander getrennt sind, die bevorzugt wie die Blenden 22, 23 ausgestaltet sind. Durch diese Ausgestaltung wird die Fernlichtverteilung in eine Vielzahl von vertikalen Streifen unterteilt, die dann ein segmentiertes Streifenfernlicht ergeben.

Je nach Anzahl der Teilfernlichtvolumina und der damit erreichbaren Winkelbreite der für den Gegenverkehr entblendeten Zone kann man nun ganz oder teilweise (teilweise heißt: der Schwenkbereich kann eingeschränkt sein) auf eine mechanische Schwenkung zur Nachführung dieser Zone verzichten. Insbesondere eine Realisierung gemäß der Figur 20 benötigt keine Schwenkung mehr.

## Patentansprüche

1. Projektionslichtmodul (10) für einen Kraftfahrzeugscheinwerfer, das dazu eingerichtet ist, im Inneren des Moduls eine innere Lichtverteilung zu erzeugen, mit einer Sekundäroptik (26), die dazu eingerichtet und angeordnet ist, ein Bild der inneren Lichtverteilung als äußere Lichtverteilung in das Vorfeld des Projektionslichtmoduls zu projizieren, mit einer Abblendlichtblende (12), die ein bei einer bestimmungsgemäßen Verwendung des Projektionslichtmoduls in einem eingebauten Scheinwerfer oberhalb dieser Blende liegendes Abblendlichtvolumen (14) des Projektionslichtmoduls von einem unterhalb dieser Blende liegenden Fernlichtvolumen (16) des Projektionslichtmoduls trennt, und mit einer im Fernlichtvolumen angeordneten Fernlichtblende (22), die eine bei der genannten Verwendung mehr vertikal als horizontal verlaufende Blendenkante (22.1) aufweist und die das Fernlichtvolumen in ein bei der genannten Verwendung rechts der Fernlichtblende liegendes rechtes Fernlichtvolumen und ein links der Fernlichtblende liegendes linkes Fernlichtvolumen teilt, wobei die Blendenkante so angeordnet ist, dass sie von der Sekundäroptik als mehr vertikal als horizontal verlaufende Hell-Dunkel-Grenze in der äußeren Lichtverteilung abgebildet wird, **dadurch gekennzeichnet, dass** die Abblendlichtblende und die Fernlichtblende Teile einer in sich starren Verbundblende (36) sind und dass die Fernlichtblende im Fernlichtvolumen schräg zu einer optischen Achse (38) des Projektionslichtmoduls angeordnet ist, so dass ihr Abstand von der optischen Achse des Projektionslichtmoduls mit längs der optischen Achse zunehmender Entfernung von der Blendenkante zunimmt.

2. Projektionslichtmodul (10) nach Anspruch 1, **dadurch gekennzeichnet, dass** die Abblendlichtblende sowohl an ihrer Oberseite als auch an ihrer Unterseite spiegelnd beschichtet ist.

3. Projektionslichtmodul (10) nach einem der vorhergehenden Ansprüche, **dadurch gekennzeichnet, dass** eine der Sekundäroptik zugewandte vertikale Blendenkante der vertikalen Blende in horizontaler und quer zur optischen Achse (38) liegenden Richtung in einem lateralen Abstand (dy) zur optischen Achse des Lichtmoduls angeordnet ist.

4. Projektionslichtmodul (10) nach einem der vorhergehenden Ansprüche, **dadurch gekennzeichnet, dass** im Fernlichtvolumen wenigstens zwei Fernlichtblenden (22, 23) angeordnet sind, die jeweils eine mehr vertikal als horizontal verlaufende Blendenkante (22.1, 23.1) aufweisen und die im Fernlichtvolumen schräg zu einer optischen Achse des Projektionslichtmoduls so angeordnet sind, dass ihr Abstand von einer optischen Achse des Projektionslichtmoduls mit längs der optischen Achse zunehmender Entfernung von der Blendenkante zunimmt.

5. Projektionslichtmodul (10) nach Anspruch 4, **dadurch gekennzeichnet, dass** die schräg zur optischen Achse (38) verlaufend angeordneten Fernlichtblenden (22, 23) auf einer Seite der optischen Achse (38) liegen.

6. Projektionslichtmodul (10) nach Anspruch 4, **dadurch gekennzeichnet, dass** die schräg zur optischen Achse verlaufend angeordneten Fernlichtblenden (22, 23) auf verschiedenen Seiten der optischen Achse (38) liegen, so dass eine rechts und eine andere links von der optischen Achse 38 liegt.

7. Projektionslichtmodul (10) nach einem der vorhergehenden Ansprüche, **dadurch gekennzeichnet, dass** zumindest Teile der mehr vertikal als horizontal verlaufenden Blendenkante der Fernlichtblende oder der mehr vertikal als horizontal verlaufenden Blendenkanten der Fernlichtblenden in der Brennfläche der Sekundäroptik (26) liegen.

8. Projektionslichtmodul (10) nach einem der vorhergehenden Ansprüche, **dadurch gekennzeichnet, dass** das Projektionslichtmodul mehrere Halbleiterlichtquellen und Licht der Halbleiterlichtquellen sammelnde und bündelnde Primäroptiken aufweist, die in dem Abblendlichtvolumen so angeordnet sind, dass das gebündelte Licht in einen Bereich konzentriert wird, in dem die horizontale Blendenkante liegt, und dass das Projektionslichtmodul mehrere weitere Halbleiterlichtquellen und Licht dieser Halbleiterlichtquellen sammelnde und bündelnde Primäroptiken aufweist, die in dem Fernlichtvolumen so angeordnet sind, dass ihr Licht in einen Bereich konzentriert wird, in dem die horizontale Blendenkante liegt.

9. Projektionslichtmodul (10) nach Anspruch 8, **dadurch gekennzeichnet, dass** wenigstens eine einem Lichtbündel zugewandte Fläche einer schräg zur optischen Achse verlaufenden Fernlichtblende eine spiegelnde Beschichtung aufweist.

10. Projektionslichtmodul (10) nach Anspruch 8 oder 9, **dadurch gekennzeichnet, dass** eine unmittelbar an eine mehr vertikal als horizontal angeordnete Blendenkante einer Fernlichtblende liegende Teilfläche (22.2) der Fernlichtblende eine streuende Strukturierung aufweist.

11. Projektionslichtmodul (10) nach einem der Ansprüche 6 bis 10, **dadurch gekennzeichnet, dass** wenigstens eine einem Lichtbündel zugewandte Fläche einer Fernlichtblende mehrere Facetten, beziehungsweise Reflektorsegmente aufweist.

12. Projektionslichtmodul (10) nach einem der vorhergehenden Ansprüche, **dadurch gekennzeichnet, dass** eine weitere Fernlichtblende 25 quer zu optischen Achse (38) angeordnet ist.

13. Projektionslichtmodul (10) nach einem der vorhergehenden Ansprüche, **dadurch gekennzeichnet, dass** die Blendenkanten der schräg zur optischen Achse (38) verlaufend angeordneten Fernlichtblenden oder, wenn nur eine solche Fernlichtblende vorhanden ist, die Blendenkante dieser Fernlichtblende nicht in der gleichen Fläche liegen wie die Blendenkante der Abblendlichtblende.
